# EUROPÄISCHE PATENTANMELDUNG

(11) **EP 4 202 229 A1**
(43) Veröffentlichungstag der Anmeldung: **28.06.2023**
(21) Anmeldenummer: 21216628.4
(22) Anmeldetag: 21.12.2021
(51) Int. Cl.: F04D 25/08, A01G 20/47, F04D 29/58, F04D 17/16, F04D 25/06

(54) **KÜHLLUFTFÜHRUNG AN EINEM ELEKTRISCHEN BLASGERÄT**

(71) Anmelder: Andreas Stihl AG & Co. KG, 71336 Waiblingen (DE)
(72) Erfinder: MANDEL, Roland, 70329 Stuttgart (DE); PIEKAREK, Sebastien, 70567 Stuttgart (DE); BUCHMANN, Alexander, 71409 Schwaikheim (DE); WAIBLINGER, Manuel, 70597 Stuttgart (DE); STÜRZEL, Thilo, 73630 Remshalden (DE)
(74) Vertreter: Karzel, Philipp

(57) **Zusammenfassung**

Die Erfindung betrifft ein elektrisches Blasgerät mit einer Gebläsespirale (10) und einem in der Gebläsespirale (10) drehenden Gebläserad (8). Zum Antrieb des Gebläserades (8) ist auf einer axialen Stirnwand (20) der Gebläsespirale (10) ein Elektromotor (30) angeordnet, dessen Antriebswelle (34) durch eine Wellenöffnung (21) in der axialen Stirnwand (20) in die Gebläsespirale (10) einragt und mit dem Gebläserad (8) verbunden ist. In der axialen Stirnwand (20) der Gebläsespirale (10) ist ferner eine ausgebildeten Kühlluftöffnung (23) ausgebildet, über die ein den Elektromotor (30) umspülender Kühlluftstrom (60) geführt ist. Um bei einem minimalen elektrischen Energieverbrauch eine ausreichende Kühlung des antreibenden Elektromotors zu gewährleistet ist vorgesehen, die Kühlluftöffnung (23) in einem Druckbereich (24) der Gebläsespirale (10) anzuordnen, so dass der Kühlluftstrom (60) zum Elektromotor (30) ein Druckluftstrom ist.

## Beschreibung

Die Erfindung betrifft ein elektrisches Blasgerät mit einer Gebläsespirale und einem in der Gebläsespirale drehenden Gebläserad. Auf einer axialen Stirnwand der Gebläsespirale ist ein Elektromotor angeordnet, dessen Antriebswelle durch eine Wellenöffnung in der axialen Stirnwand der Gebläsespirale in diese einragt und mit dem Gebläserad verbunden ist. In der axialen Stirnwand, an der der Elektromotor angeordnet ist, ist zumindest eine Kühlluftöffnung vorgesehen, über die aus der Gebläsespirale ein Kühlluftstrom abgeführt ist, der durch den Elektromotor geführt ist oder diesen umströmt und kühlt.

In einem elektrischen Blasgerät wird der Elektromotor regelmäßig von einer Steuerungselektronik angesteuert. Eine derartige Steuerungselektronik kann der Überwachung der elektrischen Belastung sowohl des Elektromotors als auch eines die elektrische Energie zur Verfügung stellenden Akkupacks dienen. Der Steuerungselektronik ist das Stellsignal eines vom Bediener zu betätigenden Stelleelementes (z. B. ein Schalthebel) zugeführt, in dessen Abhängigkeit die Steuerungselektronik den Betrieb und die Drehzahl des Elektromotors steuert.

Die Steuerungselektronik umfasst Leistungsbauteile, welche die im Betrieb des Elektromotors auftretenden hohen Ströme in einem Bereich von 30A bis zu 150A oder höher schalten und regeln. Die insbesondere an den Leistungsbauteilen anfallende Abwärme muss über eine geeignete Kühlung abgeführt werden, um die Betriebssicherheit der Steuerungselektronik zu gewährleisten.

Es ist bekannt, aus der Gebläsespirale einen Kühlluftstrom abzusaugen und diesen sowohl zur Kühlung des Elektromotors als auch zur Kühlung der Steuerungselektronik zu verwenden. Hierzu weist der Elektromotor ein Kühlluftgebläse auf, das über eine Öffnung in der axialen Stirnwand der Gebläsespirale einen Kühlluftstrom ansaugt. Dieser angesaugte Kühlluftstrom wird über den Elektromotor geführt. Der aus dem Elektromotor austretende Kühlluftstrom wird dann der Steuerungselektronik zur Kühlung der Leistungsbauteile zugeführt. Die bereits erwärmte Kühlluft des Elektromotors kann nur eine bedingte ausreichende Kühlung der Leistungsbauteile gewährleisten.

Neben der Antriebsleistung des Elektromotors muss dieser auch das Kühlluftgebläse antreiben, um einen in der Menge ausreichenden Kühlluftstrom zum Elektromotor zu fördern. Die zum Antrieb des Kühlluftgebläses erforderliche elektrische Energie kann nicht zum Antrieb des Gebläserades genutzt werden. Insbesondere bei mit einem Akkupack betriebenen elektrischen Blasgeräten ist ein effizientes Energiemanagement erwünscht, um einerseits eine hohe Blasleistung zur Verfügung zu stellen und andererseits eine lange Betriebsdauer zu gewährl ei sten.

Der Erfindung liegt die Aufgabe zugrunde ein elektrisches Blasgerät derart weiterzubilden, dass bei einem minimalen elektrischen Energieverbrauch eine ausreichende Kühlung des antreibenden Elektromotors gewährleistet ist.

Die Aufgabe wird nach den Merkmalen des Anspruchs 1 gelöst.

Der dem Elektromotor zugeführte Kühlluftstrom tritt aus einem Druckbereich der Gebläsespirale aus, wobei eine Strömungsrichtung gegeben ist, die aus der Gebläsespirale zum Elektromotor gerichtet ist. Diese erste Kühlluftöffnung in einem Druckbereich der Gebläsespirale bewirkt einen Druckluftstrom zum Elektromotor, so dass der zuströmende Kühlluftstrom ein Druckluftstrom ist. Ein vom Elektromotor angetriebenes Kühlgebläse bzw. ein im Elektromotor verbautes Lüfterrad kann entfallen. Die dem Elektromotor zugeführte elektrische Energie kann überwiegend zum Antrieb des Gebläserades in der Gebläsespirale genutzt werden.

Zur Erzielung einer hohen Kühlwirkung ist vorgesehen, dass nach dem Austritt des Kühlluftstroms aus der ersten Kühlluftöffnung zum Elektromotor im Strömungsweg des Kühlluftstroms eine Strömungsdrossel angeordnet ist. Dadurch kann die Verweildauer der Kühlluft im Bereich des Elektromotors erhöht werden. Eine erhöhte Verweildauer der Kühlluft im Bereich des Elektromotors führt zu einer besseren Kühlwirkung.

In besonderer Ausgestaltung der Erfindung besteht die erste Kühlluftöffnung für den Kühlluftstrom zum Elektromotor aus mindestens einer bis mehreren Teilluftöffnungen in der axialen Stirnwand der Gebläsespirale. Mehrere Teilluftöffnungen sind in Drehrichtung des Gebläserades hintereinander angeordnet. So können zum Beispiel drei Teilluftöffnungen in Drehrichtung des Gebläserades hintereinander angeordnet sein, wobei die Teilluftöffnungen vorteilhaft gleich ausgebildet sind und insbesondere mit gleichen Abständen zueinander liegen. Gemessen vom Zentrum einer Teilluftöffnung liegen die Teilluftöffnungen mit einem Winkelabstand von 120° in Drehrichtung des Gebläserades hintereinander. Insbesondere ist vorgesehen, dass die Teilluftöffnungen auf einem gemeinsamen Umfangskreis um die Antriebswelle des Elektromotors angeordnet sind.

In weiterer Ausgestaltung der Erfindung ist vorgesehen, eine Teilluftöffnung als Luftkanal mit einem Lufteinlass und einem Luftauslass auszubilden. Der Lufteinlass ist innerhalb der Gebläsespirale auf der Innenseite der axialen Stirnwand vorgesehen. Der Luftauslass liegt außerhalb der Gebläsespirale auf der Außenseite der axialen Stirnwand. Zwischen dem Lufteinlass auf der Innenseite der axialen Stirnwand und dem Luftauslass auf der Außenseite der axialen Stirnwand ist eine luftführende Strömungsrampe ausgebildet. Die Strömungsrampe fällt in Drehrichtung des Gebläserades vom Lufteinlass zum Luftauslass hin ab. Die vom Gebläserad bewegten Luftmassen strömen in Drehrichtung des Gebläserades, sodass die in Drehrichtung des Gebläserades abfallende Strömungsrampe den Druckluftstrom ohne wesentliche Störung der Strömung und insbesondere ohne Änderung der Strömungsrichtung abzweigt. Hervorzuheben ist, dass durch den Zykloneffekt der in Drehrichtung des Gebläserades beschleunigten Luftmassen gewährleistet ist, dass der durch die erste Kühlluftöffnung bzw. der durch die Teilluftöffnungen der ersten Kühlluftöffnung abgezweigte Luftstrom zumindest von Grobschmutz frei ist. Die Gefahr einer starken Verschmutzung der Kühlluftführungen und/oder der Kühlluftkanäle durch Grobschmutz ist dadurch vermieden.

Zum Betrieb des Elektromotors ist eine Steuerungselektronik vorgesehen. Die Steuerungselektronik ist geeignet, in Abhängigkeit des Ausgangssignals eines Bedienelementes den Elektromotor aus einer elektrischen Energiequelle zu bestromen. So kann entsprechend dem zugeführten Ausgangssignal des Bedienelementes die Drehzahl des Elektromotors eingestellt werden. Zur Kühlung der Steuerungselektronik ist in der axialen Stirnwand der Gebläsespirale eine zweite Kühlluftöffnung ausgebildet. Über die zweite Kühlluftöffnung ist aus der Gebläsespirale ein zweiter Kühlluftstrom abgezweigt, der der Steuerungselektronik zugeführt ist. Der zweite Kühlluftstrom ist ein Druckluftstrom.

In besonderer Ausgestaltung der Erfindung ist vorgesehen, dass der aus der Gebläsespirale über die erste Kühlluftöffnung zum Elektromotor geführte erste Kühlluftstrom und der über die zweite Kühlluftöffnung zur Steuerungselektronik geführte zweite Kühlluftstrom voneinander getrennte Kühlluftströme sind. Änderungen des ersten Kühlluftstroms haben keine Änderungen im zweiten Kühlluftstrom zur Folge und umgekehrt.

Die Ausbildung von zwei voneinander getrennten Kühlluftströmen zur unabhängigen Kühlung von zwei Wärmequellen stellt insbesondere bei einem elektrischen Blasgerät eine eigenständige Erfindung dar. Durch die Trennung der Kühlluftströme kann der erste Kühlluftstrom zur effizienten Kühlung einer ersten Wärmequelle ausgelegt werden und der zweite Kühlluftstrom zur effizienten Kühlung einer zweiten Wärmequelle gestaltet werden. Dies ist insbesondere dann von Vorteil, wenn die zu kühlenden Wärmequellen einen unterschiedlich hohen Kühlbedarf haben.

Nach der Erfindung ist vorgesehen, dass die zweite Kühlluftöffnung für den zweiten Kühlluftstrom einen größeren radialen Abstand zur Wellenöffnung bzw. zur Drehachse der Antriebswelle aufweist als die erste Kühlluftöffnung für den ersten Kühlluftstrom. Vorteilhaft ist die erste Kühlluftöffnung im Bereich eines niedrigeren Druckniveaus der Gebläsespirale in der axialen Stirnwand der Gebläsespirale vorgesehen. Die zweite Kühlluftöffnung ist im Bereich eines höheren Druckniveaus der Gebläsespirale in der Stirnwand der Gebläsespirale ausgebildet.

In Weiterbildung der Erfindung ist der Elektromotor in einem Motorgehäuse aufgenommen, dessen Innenraum einen ersten Kühlluftraum ausbildet. Die Steuerungselektronik ist in einem Elektronikgehäuse aufgenommen, in dem ein vom Kühlluftraum des Motorgehäuses getrennter, weiterer Kühlluftraum ausgebildet ist. Die Ausbildung ist insbesondere so vorgesehen, dass der erste Kühlluftstrom über die erste Kühlluftöffnung in den Kühlluftraum des Motorgehäuses eintritt und über die zweite Kühlluftöffnung der zweite Kühlluftstrom in den weiteren Kühlluftraum des Elektronikgehäuses eintritt.

Es kann zweckmäßig sein, die in das Motorgehäuse einströmende Kühlluft anschließend dem Elektronikgehäuse mit der Steuerungselektronik zuzuführen. Es ist auch eine Kühlluftführung vorteilhaft, bei der die dem Elektronikgehäuse zugeführte Kühlluft anschließend dem Motorgehäuse zugeführt ist.

Das Motorgehäuse ist vorteilhaft stirnseitig offen ausgebildet und wird bei seiner Montage an der Stirnwand der Gebläsespirale von der axialen Stirnwand der Gebläsespirale verschlossen. Das Motorgehäuse kann auf eine Ringwand der axialen Stirnwand der Gebläsespirale aufgesteckt sein, sodass weitere Befestigungsmaßnahmen entfallen können.

Insbesondere ist vorgesehen, dass das Motorgehäuse und das Elektronikgehäuse auf der gleichen axialen Stirnwand der Gebläsespirale gehalten sind. Das Motorgehäuse und das Elektronikgehäuse können voneinander getrennte Gehäusebauteile sein. In besonderer Ausgestaltung der Erfindung bilden das Motorgehäuse und das Elektronikgehäuse ein gemeinsames Gehäuse, in dem einmal ein Aufnahmeraum für den Elektromotor und einmal ein davon getrennter Aufnahmeraum für die Elektronik ausgebildet sind. Dadurch können sich Vorteile bei der Verdrahtung zwischen Elektromotor und Elektronik ergeben. Ein gemeinsames Gehäuse ergibt Vorteile bei der Montage.

Die Lage der ersten Kühlluftöffnung ist insbesondere derart vorgesehen, dass die erste Kühlluftöffnung benachbart zur Wellenöffnung liegt. Die erste Kühlluftöffnung liegt vorzugsweise radial innerhalb der Befestigungselemente eines Tragflansches einer Motorlagerung, über die der Elektromotor an der axialen Stirnwand der Gebläsespirale gehalten ist.

In Weiterbildung der Erfindung kann in der axialen Stirnwand der Gebläsespirale eine weitere Kühlluftöffnung vorgesehen sein. Der aus der weiteren Kühlluftöffnung insbesondere als Druckluftstrom austretende weitere Kühlluftstrom ist in einen Gehäuseschacht eingeleitet, in dem ein Akkupack eingesetzt ist. Die eingeleitete Kühlluft strömt durch einen Spalt zwischen dem Akkupack und dem Gehäuseschacht nach außen, wodurch eine Kühlung des Akkupacks erzielt ist.

Ein eigenständiger Erfindungsgedanke besteht darin, einen über eine Kühlluftöffnung aus der Gebläsespirale abgezweigten Kühlluftstrom und/oder einen aus dem Motorgehäuse und/oder dem Elektronikgehäuse austretenden Abluftstrom der Rückenplatte zuzuführen. Zweckmäßig ist die Rückenplatte derart ausgebildet, dass der Kühlluftstrom und/oder ein Abluftstrom die Rückenplatte durchströmt. So kann der Rücken eines Benutzers bei hohen Umgebungstemperaturen gekühlt oder bei niedrigen Umgebungstemperaturen gewärmt werden.

Zweckmäßig ist die Anordnung so ausgebildet, dass der Kühlluftstrom und/oder ein Abluftstrom der Rückenplatte über ein steuerbares Strömungsventil zugeführt sind. Das Strömungsventil ist zur Bedienung durch den Benutzer ausgebildet, so dass der Benutzer eine für seinen Rücken empfundene Wohlfühltemperatur einstellen kann.

Es kann zweckmäßig sein, ein aus dem Motorgehäuse und/oder dem Elektronikgehäuse austretenden Abluftstrom einer Ansaugöffnung der Gebläsespirale zuzuführen. Ein in die Umgebung ausgeblasener Ablaufstrom wird so vermieden.

Weitere Merkmale der Erfindung ergeben sich aus den Ansprüchen, der Beschreibung und der Zeichnung, in der ein Ausführungsbeispiel der Erfindung beispielhaft dargestellt ist. Die in den Ansprüchen, der Beschreibung und den Zeichnungen offenbarten Merkmale sind untereinander insbesondere beliebig kombinierbar. Die Zeichnungen zeigen:
- Fig. 1: eine perspektivische Darstellung eines rückengetragenen elektrischen Blasgerätes in einer Ansicht von hinten,
- Fig. 2: einen Schnitt durch das rückengetragene elektrische Blasgerät nach Fig. 1 auf der Höhe der Antriebswelle eines Elektromotors,
- Fig. 3: in vergrößerter Darstellung einen Schnitt durch die Gebläsespirale des Blasgerätes auf der Höhe der Antriebswelle des Elektromotors,
- Fig. 4: eine Innenansicht auf eine axiale Stirnwand der Gebläsespirale mit Darstellung mehrerer Teilluftöffnungen als erste Kühlluftöffnung für einen ersten Kühlluftstrom sowie mit einer zweiten Kühlluftöffnung für einen zweiten, vom ersten getrennten Kühlluftstrom,
- Fig. 5: in vergrößerter Darstellung einen schematischen Schnitt durch eine Teilluftöffnung der ersten Kühlluftöffnung,
- Fig. 6: eine Außenansicht auf die den antreibenden Elektromotor tragende axiale Stirnwand der Gebläsespirale mit Darstellung der ersten Kühlluftöffnung und der zweiten Kühlluftöffnung,
- Fig. 7: eine perspektivische Ansicht auf die Außenseite der axialen Stirnwand der Gebläsespirale mit einem daran gehaltenen Elektromotor sowie mit einer daran gehaltenen Steuerungselektronik,
- Fig. 8: eine Ansicht gemäß Fig. 7 mit Teilschnitt durch ein den Elektromotor aufnehmendes Motorgehäuse und ein die Steuerungselektronik aufnehmendes Elektronikgehäuse,
- Fig. 9: eine schematische Ansicht eines erfindungsgemäßen Blasgerätes mit einem gemeinsamen Gehäuse für den Elektromotor und die Elektronik,
- Fig. 10: eine schematische Darstellung der dem Elektromotor und der Steuerungselektronik zugeführten Kühlluftströme und eines weiteren, dem Akkupack in einem Gehäuseschacht zugeführten Kühlluftstrom s,
- Fig. 11: eine schematische Darstellung eines über ein Strömungsventil der Rückenplatte zugeführten Luftstroms aus Kühlluft und Abluft,
- Fig. 12: eine schematische Darstellung einer Schaltstellung des Strömungsventils zum Wärmen der Rückenplatte,
- Fig. 13: entsprechend Fig. 12 eine schematische Darstellung des Strömungsventils in einer den Kühlluftstrom und den Abluftstrom sperrenden Schaltstellung,
- Fig. 14: entsprechend Fig. 12 eine schematische Darstellung einer Schaltstellung des Strömungsventils zum Kühlen der Rückenplatte.

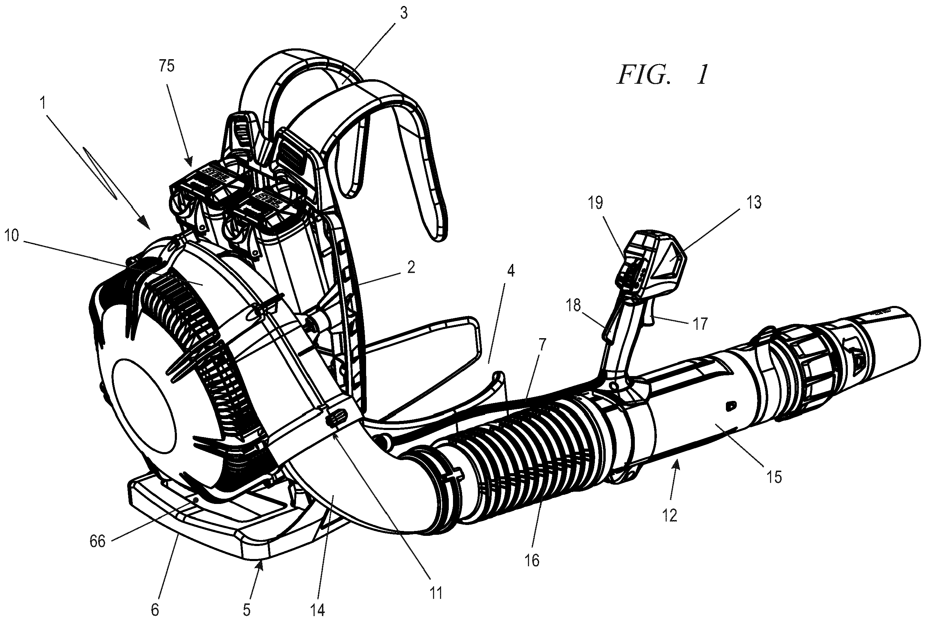

Das in Fig. 1 dargestellte Ausführungsbeispiel eines Blasgerätes 1 ist ein rückengetragenes Blasgerät. Auch andere Ausgestaltungen des Blasgerätes wie ein handgetragenes Blasgerät, ein fahrbares Blasgerät oder dergleichen können mit dem Gegenstand der Erfindung ausgerüstet werden.

Das rückengetragene Blasgerät 1 umfasst eine Rückenplatte 2, die mittels schematisch dargestellten Schultergurten 3 und einem schematisch dargestellten Beckengurt 4 auf dem Rücken eines Benutzers festgelegt wird. Die Rückenplatte 2 ist Teil einer Trage 5, die mit einer Standplatte 6 versehen ist. Die Rückenplatte 2 und die Standplatte 6 bilden die in Seitenansicht L-förmige ausgebildete Trage 5. Die Standplatte 6 weist vorteilhaft eine zentrale Öffnung 66 auf. Über die Öffnung 66 kann von unterhalb des Blasgerätes 1 Umgebungsluft angesaugt werden. Zweckmäßig kann die Standplatte 6 als Bügel ausgebildet sein, insbesondere als U-förmiger Bügel ausgebildet sein. Die Enden des Bügels sind an der Rückenplatte festgelegt. Der Bügel besteht vorteilhaft aus einem metallischen Werkstoff oder einer Metalllegierung.

An der Rückenplatte 2 ist eine Gebläsespirale 10 gehalten, die einen Auslass 11 zum Anschluss eines Blasrohrs 12 aufweist. Auf dem Blasrohr 12 ist ein Handgriff 13 zum Halten und Führen des Blasrohrs 12 festgelegt. Das Blasrohr 12 weist einen hinteren starren Rohrabschnitt 14 zum Anschluss an den Auslass 11 der Gebläsespirale 10 auf. An den hinteren starren Rohrabschnitt 14 ist ein flexibler Rohrabschnitt 16 angeschlossen, der mit einem vorderen starren Rohrabschnitt 15 verbunden ist. Der Handgriff 13 ist auf dem vorderen Rohrabschnitt 15 festgelegt. Der vordere Rohrabschnitt 15 ist relativ zum hinteren Rohrabschnitt 14 in alle Raumrichtungen verschwenkbar.

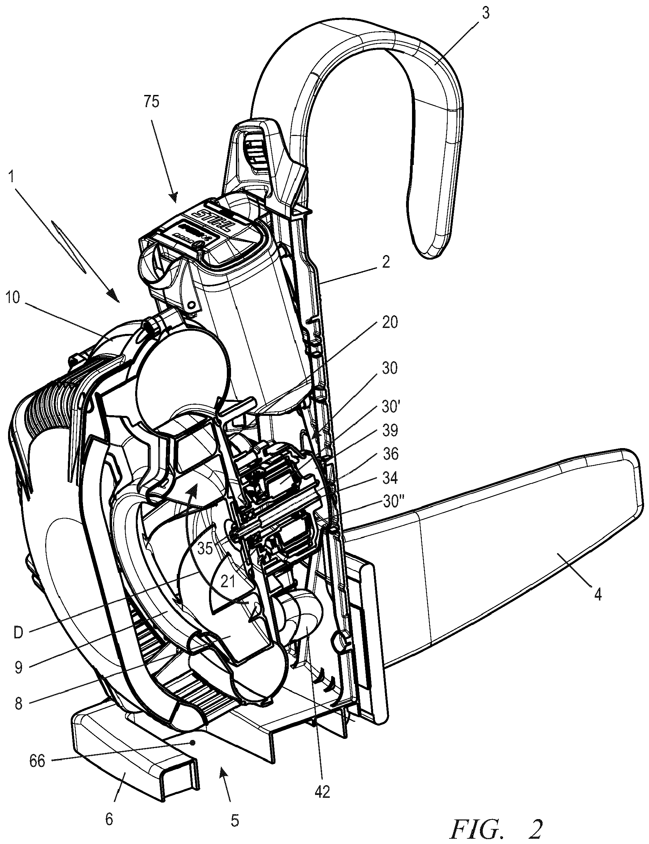

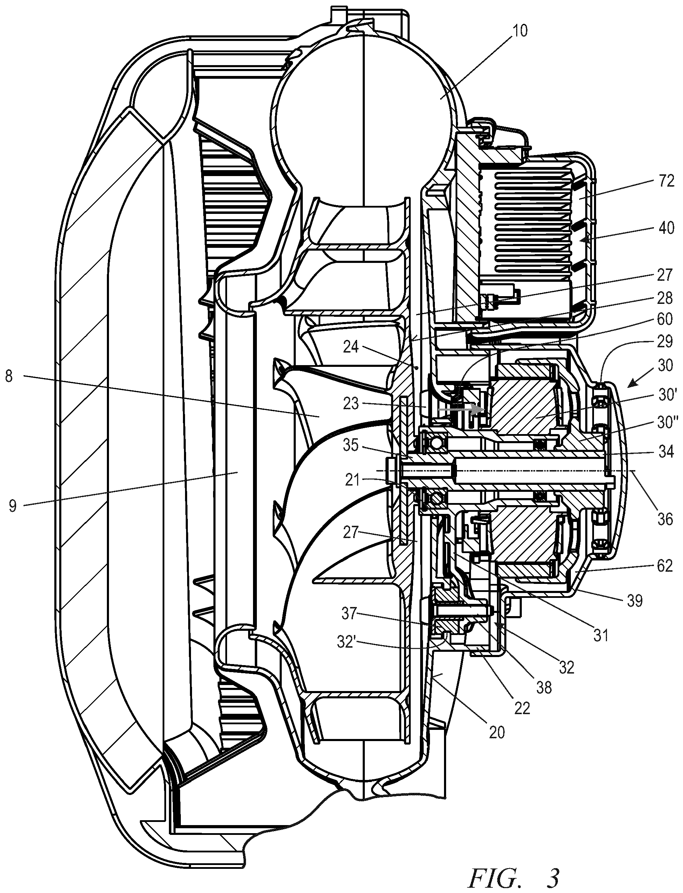

Im Handgriff 13 sind Bedienelemente vorgesehen, so zum Beispiel ein Schalthebel 17 (in der Funktion eines ,Gashebels'), eine Schalthebelsperre 18 oder weitere geeignete Bedienelemente 19. Die Bedienelemente sind über eine Verbindungsleitung 7 mit einer Steuerungselektronik 40 zur Bedienung eines Elektromotors 30 (Fig. 2, 3) verbunden.

Wie Fig. 2 zeigt, ist in der Gebläsespirale 10 ein Gebläserad 8 angeordnet, welches über eine Ansaugöffnung 9 axial Luft ansaugt und radial in die Gebläsespirale 10 und über den Auslass 11 zum Blasrohr 12 fördert. Das Gebläserad 8 ist von dem Elektromotor 30 angetrieben, der auf einer axialen Stirnwand 20 der Gebläsespirale 10 angeordnet ist. Die Antriebswelle 34 des Elektromotors 30 ragt durch eine Wellenöffnung 21 in der axialen Stirnwand 20 der Gebläsespirale 10 in die Gebläsespirale 10 ein. Der einragende Endabschnitt 35 der Antriebswelle 34 ist drehfest mit dem Gebläserad 8 antriebsverbunden.

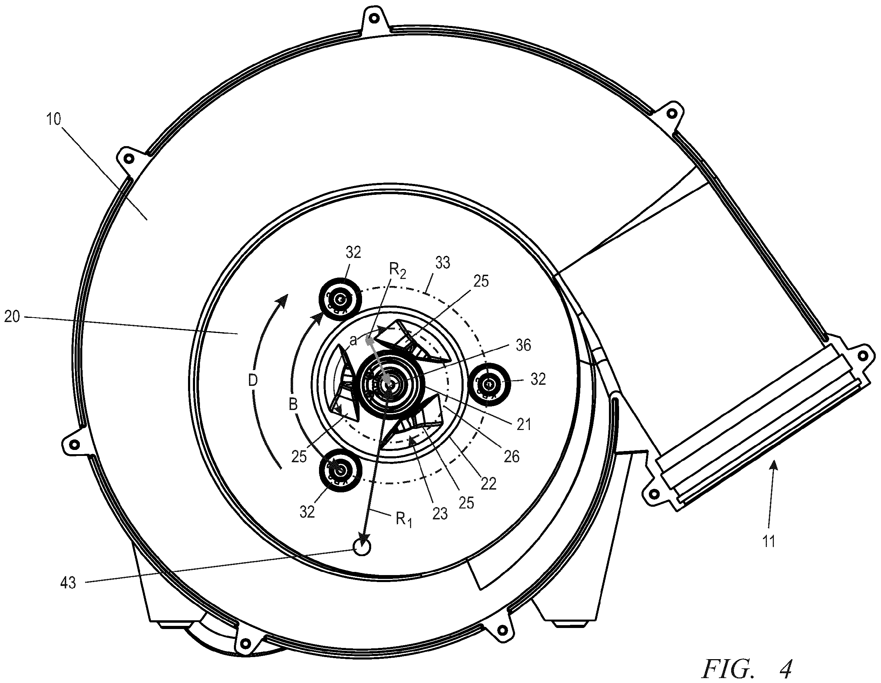

Der Elektromotor 30 weist einen Tragflansch 31 (Fig. 3) auf, der im gezeigten Ausführungsbeispiel mit drei Befestigungselementen 32 an der axialen Stirnwand 20 der Gebläsespirale 10 gehalten ist. Benachbarte Befestigungselemente 32 liegen - wie Fig. 4 zeigt - in Drehrichtung D des Gebläserades 8 mit einem Abstand B zueinander. Die im gezeigten Ausführungsbeispiel gezeigte Dreipunkt-Befestigung des Elektromotors an der axialen Stirnwand 20 der Gebläsespirale 10 weist in Drehrichtung D des Gebläserades 8 gleiche Abstände B der Befestigungselemente 32 zueinander auf. Die Befestigungselemente 32 liegen insbesondere auf einem gemeinsamen Kreis 33 (Fig. 4), insbesondere auf einem gemeinsamen Kreis 33 um die Drehachse 36 der Antriebswelle 34.

Ein Befestigungselement 32 des Elektromotors 30 besteht im Wesentlichen aus einem Antivibrationselement 37, welches in eine Aufnahme 32' (Fig. 3) in der axialen Stirnwand 20 der Gebläsespirale 10 eingeknöpft gehalten ist. Das Antivibrationselement 37 ist mittels einer Befestigungsschraube 38 am Tragflansch 31 unverlierbar gehalten. Durch die Antivibrationselemente 37 der Befestigungselemente 32 ist der Elektromotor 30 von der Gebläsespirale 10 vibrationsentkoppelt, so dass ein geräuschreduzierter Betrieb möglich ist.

Der Elektromotor 30 ist ein sogenannter Außenläufer, d. h., der Stator 30' liegt innerhalb des Rotors 30". Die mit dem Rotor 30" verbundene Antriebswelle 34 durchragt den Stator 30'. Die Antriebswelle 34 ist in einer zentralen Hülse des Tragflanschs 31 gelagert und vorzugsweise axial gesichert gehalten.

Der Elektromotor 30 kann in einem Motorgehäuse 39 aufgenommen sein, welches auf einer ringförmigen Gehäusehalterung 22 der axialen Stirnwand 20 festgelegt, insbesondere aufgesteckt ist. Die Steckverbindung zwischen dem Motorgehäuse 39 und der Gehäusehalterung 22 kann eine formschlüssige Gehäusesicherung umfassen. Das Motorgehäuse 39 ist vorteilhaft stirnseitig offen und ist insbesondere von der axialen Stirnwand 20 der Gebläsespirale 10 verschlossen.

In der axialen Stirnwand 20 der Gebläsespirale 10, an der der Elektromotor 30 angeordnet ist, ist zumindest eine Kühlluftöffnung 23 für einen ersten Kühlluftstrom 60 vorgesehen. Die Kühlluftöffnung 23 verbindet einen Druckbereich 24 der Gebläsespirale 10 mit dem Bauraum des Elektromotors 30. Im gezeigten Ausführungsbeispiel liegt die Kühlluftöffnung 23 innerhalb der Befestigungspunkte 32 des Elektromotors 30. Axial auf den Rotor 30" des Elektromotors 30 gesehen liegt die Kühlluftöffnung 23 innerhalb des Rotors 30" des Elektromotors 30. Ein aus dem Druckbereich 24 über die Kühlluftöffnung 23 dem Elektromotor 30 zuströmender der Kühlluftstrom 60 ist ein Druckluftstrom. Der Kühlluftstrom 30 weist eine Strömungsrichtung auf, die aus der Gebläsespirale 10 zum Elektromotor 30 gerichtet ist, insbesondere auf den Stator 30' des Elektromotors 30 gerichtet ist.

Der Druckbereich 24 ist in der Gebläsespirale in dem Spalt 27 zwischen der Rückseite 28 des Gebläserades 8 und der axialen Stirnwand 20 ausgebildet. Dabei nimmt das Druckniveau mit zunehmendem Abstand von der Drehachse 36 der Antriebswelle zu.

Im gezeigten Ausführungsbeispiel ist die Kühlluftöffnung 23 aus mehreren Teilluftöffnungen 25 zusammengesetzt. Die die Kühlluftöffnung 23 bildenden Teilluftöffnungen 23 sind in Drehrichtung D des Gebläserades 8 hintereinander liegend angeordnet. Insbesondere liegen die Teilluftöffnungen 25 auf einem gemeinsamen Umfangskreis 26 um die Drehachse 36 der Antriebswelle 34 des Elektromotors 30. Benachbarte Teilluftöffnungen 25 liegen mit gleichen Abständen a zueinander. Wie Fig. 4 zeigt, liegen die Teilluftöffnungen 25 in einem Ringraum zwischen der Wellenöffnung 21 und den Befestigungselementen 32 des Tragflanschs 31 des Elektromotors 30.

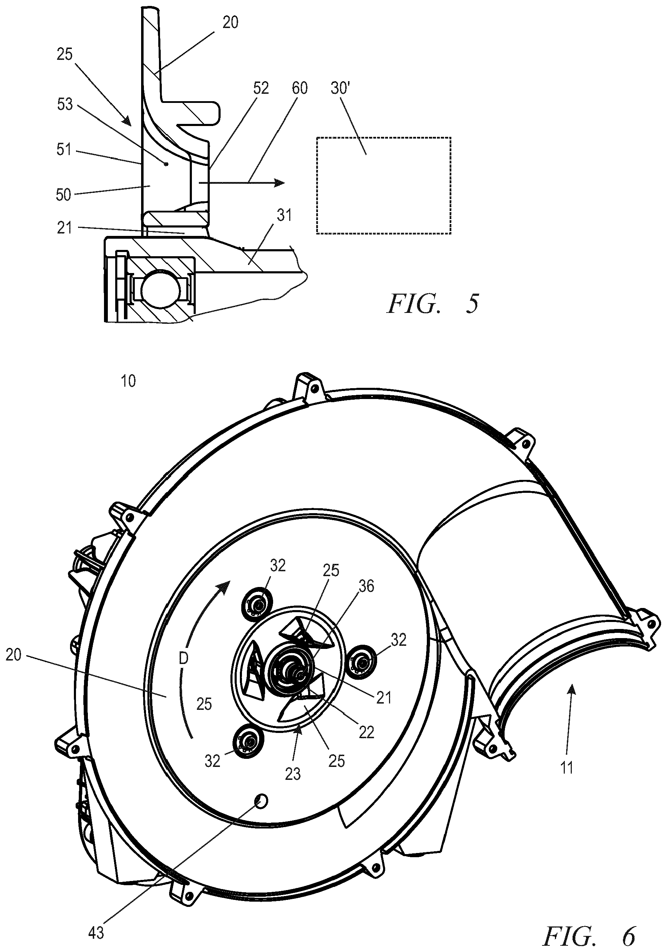

In Fig. 5 ist ein Axialschnitt durch eine Teilluftöffnung 25 gezeigt. Die Teilluftöffnungen 25 ist als kurzer Luftkanal 50 mit einem Lufteinlass 51 und einem Luftauslass 52 ausgebildet. Zwischen dem Lufteinlass 51 und dem Luftauslass 52 ist eine Strömungsrampe 53 ausgebildet, die in Drehrichtung D des Gebläserades 8 zum Luftauslass 52 hin abfällt. Die Strömungsrampe 53 erstreckt sich in ihrer Länge in Drehrichtung D des Gebläserades 8. Der Lufteinlass 51 ist größer ausgebildet als der Luftauslass 52.

In der Gebläsespirale 10 bildet sich bei Rotation des Gebläserades 8 in Drehrichtung D zwischen der Rückseite 28 des Gebläserades 8 und der axialen Stirnwand 20 der Gebläsespirale 10 im Spalt 27 ein Druckbereich 24 aus. Aufgrund der Rotation des Gebläserades 8 bewegen sich die Luftmassen im Druckbereich 24 in Drehrichtung D des Gebläserades 8. Die von der Innenseite der Stirnwand 20 zum Luftauslass 52 des Luftkanals 50 auf der Außenseite der Stirnwand 20 abfallende Strömungsrampe 53 erleichtert ein Abströmen des Druckluftstroms in Drehrichtung D des Gebläserades 8.

Nach dem Austritt des einen Druckluftstrom bildenden Kühlluftstroms 60 aus dem Luftauslass 52 der Teilluftöffnung 25 der Kühlluftöffnung 23 ist im Strömungsweg durch den Elektromotor 30 eine Strömungsdrossel 29 vorgesehen, durch die die Verweilzeit der Luftmassen des Kühlluftstroms 60 innerhalb des Elektromotors 30 gesteigert werden kann. Der als Druckluftstrom ausgebildete Kühlluftstrom 60 wird durch die Strömungsdrossel 29 verlangsamt. Damit ist die Möglichkeit eines intensiven Wärmeübergangs gegeben, sodass eine große Wärmemenge vom Elektromotor 30 abgeführt werden kann.

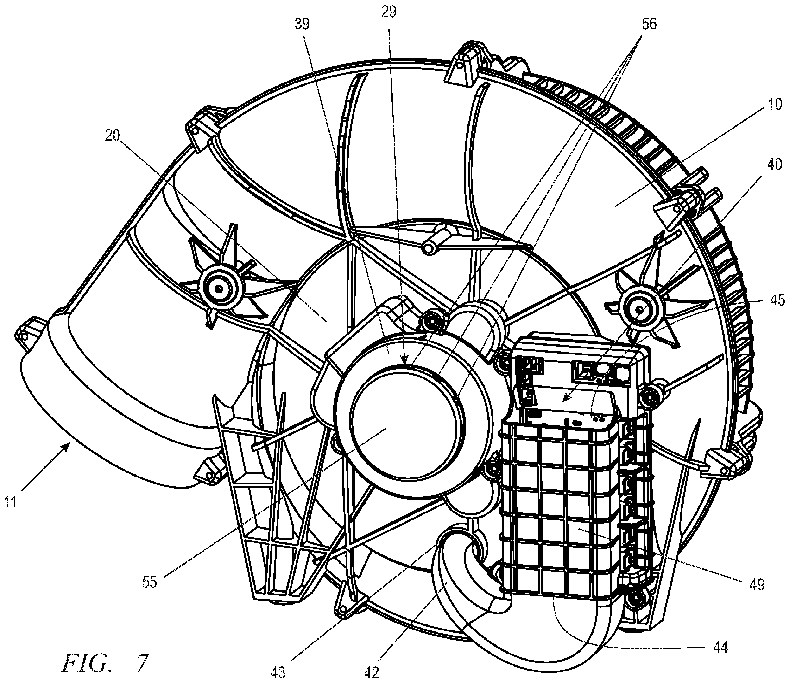

Im gezeigten Ausführungsbeispiel ist die Strömungsdrossel 29 im Boden des Motorgehäuses 39 ausgebildet. Wie Fig. 7 zeigt, sind über den Umfang eines Gehäusedoms 55 mehrere Öffnungen 56 ausgebildet. Die Summe der Öffnungsquerschnitte der Öffnungen 56 bildet die Strömungsdrossel 29. Die Summe der Öffnungsquerschnitte der Öffnungen 56 ist bevorzugt kleiner ausgebildet als die Summe der Öffnungsquerschnitte der die Kühlluftöffnung 23 bildenden Teilluftöffnungen 25. Der den Kühlluftstrom 60 zuführende Öffnungsquerschnitt der Kühlluftöffnung 23 ist größer ausgebildet als die Summe der Öffnungsquerschnitte der die Kühlluft aus dem Motorgehäuse 39 abführenden Öffnungen 56. Dadurch kann im Motorgehäuse 39 ein Kühlluftstau bewirkt werden, durch die die Verweilzeit der Kühlluft innerhalb des Motorgehäuses 39 gesteigert wird. Unabhängig von der Höhe des Druckniveaus im Druckbereich der Gebläsespirale 10, aus der die Kühlluftöffnung 23 den Druckluftstrom abzweigt, ist eine effiziente Kühlung des Elektromotors 30 gewährleistet.

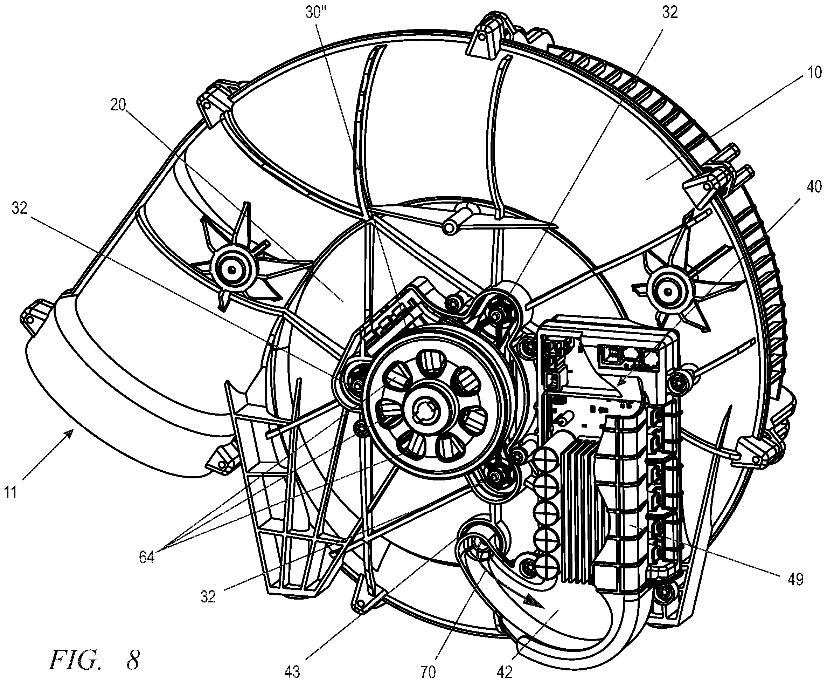

Wie in Fig. 8 gezeigt, ist der Boden des Rotors 30" des vorzugsweise als Außenläufer ausgebildeten Elektromotors 30 mit Durchbrüchen 64 ausgebildet. Die Durchbrüche 64 erleichtern ein Abströmen der den Elektromotor 30 zugeführten Kühlluft aus dem Bereich des Stators 30' in den Gehäusedom 55 (Fig. 7).

Wie die Fig. 7 und 8 zeigen, ist der Elektromotor 30 und die Steuerungselektronik 40 an der gleichen Stirnwand 20 der Gebläsespirale 10 angeordnet. Bevorzugt ist sowohl der Elektromotor 30 als auch die Steuerungselektronik 40 an der Stirnwand 20 selbst gehalten. Die Steuerungselektronik 40 steht über die Verbindungsleitung 7 mit den Bedienelementen wie dem Schalthebel 17 und weiteren Bedienelemente 19 des Handgriffs 13 in Verbindung. In Abhängigkeit zum Beispiel eines Stellsignals des Schalthebels 17, welches als analoges Signal, als digitales Signal oder als Signal einer gewählten Leistungsstufe ausgebildet sein kann, wird der Elektromotor 30 mit einer dem Signal des Schalthebels 17 entsprechender Drehzahl angesteuert. Die zum Betrieb des Elektromotors 30 und der Steuerungselektronik 40 notwendige Energie wird von einem Akkupack 75 bereitgestellt, der auf der Trage 5 des elektrischen Blasgerätes 1 gehalten sein kann.

Der Steuerungselektronik 40 ist ein Kühlluftstrom 70 zugeführt, der aus einem Druckbereich der Gebläsespirale 10 der Steuerungselektronik 40 zuströmt. Hierzu ist in der axialen Stirnwand 20 eine weitere Kühlluftöffnung 43 (Fig. 4, 6) vorgesehen. Fig. 4 zeigt, dass die weitere, zweite Kühlluftöffnung 43 mit einem größeren Abstand R₂ zur Drehachse 36 der Antriebswelle 34 liegt als die erste Kühlluftöffnung 23 bzw. die die erste Kühlluftöffnung 23 bildenden Teilluftöffnungen 25. Die erste Kühlluftöffnung 23 liegt mit einem radialen Abstand R1 zur Drehachse 36 der Antriebswelle 34. Der Abstand R₂ ist größer als der Abstand R₁. Bevorzugt ist der Abstand R₂ insbesondere 2- bis 4-mal größer als der Abstand R₁. Die erste Kühlluftöffnung 23 liegt in einem Druckbereich 24 der Gebläsespirale 10, welche ein niedrigeres Druckniveau aufweist als der Druckbereich, in der die zweite Kühlluftöffnung 43 vorgesehen ist. Die zweite Kühlluftöffnung 43 zweigt einen Druckluftstrom aus einem Druckbereich mit einem höheren Druckniveau aus der Gebläsespirale 10 ab.

Der erste, den Elektromotor 30 kühlende Kühlluftstrom 60 strömt aus der ersten Kühlluftöffnung 23 als Druckluftstrom zum Elektromotor 30. Der zweite, die Steuerungselektronik 40 kühlende Kühlluftstrom 70 strömt aus der zweiten Kühlluftöffnung 43 als Druckluftstrom zur Steuerungselektronik 40. Der erste Kühlluftstrom 60 (Fig. 3) und der zweite Kühlluftstrom 70 (Fig. 8) sind voneinander getrennte Kühlluftströme. Damit ist eine verlässliche Kühlung des Elektromotors 30 einerseits und der Steuerungselektronik 40 andererseits gewährleistet. Jeder Kühlluftstrom 60 bzw. 70 kann vorteilhaft in seiner Luftmenge und insbesondere auch in seiner Strömungsgeschwindigkeit auf die Erfordernisse der gewünschten Kühlung eingestellt werden, ohne dass der jeweils andere Kühlluftstrom 70 bzw. 60 beeinträchtigt ist. Im gezeigten Ausführungsbeispiel steht die zweite Kühlluftöffnung 43 mit der Steuerungselektronik 40 über einen Kühlkanal 42 in Verbindung. Der als Druckluftstrom ausgebildete zweite Kühlluftstrom 70 tritt über die zweite Kühlluftöffnung 43 aus der Gebläsespirale 10 in den Kühlkanal 42 ein, wobei sich der Kühlkanal 42 auf seinem Strömungsweg zur Steuerungselektronik 40 erweitert. Dadurch kann eine Reduktion der Strömungsgeschwindigkeit des aus der zweiten Kühlluftöffnung 43 austretenden Druckluftstroms erzielt werden.

Im gezeigten Ausführungsbeispiel ist der Elektromotor 30 in dem Motorgehäuse 39 aufgenommen, dessen Innenraum einen ersten Kühlluftraum 62 ausbildet.

Die Steuerungselektronik 40 ist in einem vom Motorgehäuse 39 getrennten Elektronikgehäuse 49 aufgenommen. Das Elektronikgehäuse 49 bildet einen vom Kühlluftraum 62 des Motorgehäuses 39 getrennten, weiteren Kühlluftraum 72.

Der erste als Druckluftstrom ausgebildete Kühlluftstrom 60 strömt über die erste Kühlluftöffnung 23 in den Kühlluftraum 62 des Motorgehäuses 39 ein. Über die zweite Kühlluftöffnung 43 und den Kühlkanal 42 strömt der zweite Kühlluftstrom 70 in den weiteren Kühlluftraum 72 des Elektronikgehäuses 49 ein. In vorteilhafter Weiterbildung der Erfindung ist vorgesehen, dass sich der Kühlkanal 42 ausgehend von der zweiten Kühlluftöffnung 43 bis auf den Querschnitt des Kühlluftraums 72 des Elektronikgehäuses 49 erweitert. Der Kühlluftkanal 42 schließt an einer Stirnseite 44 des Elektronikgehäuses 49 an den Kühlluftraum 72 an. Die gegenüber liegende Stirnseite 46 des Elektronikgehäuses 49 ist offen und bildet einen Kühlluftauslass.

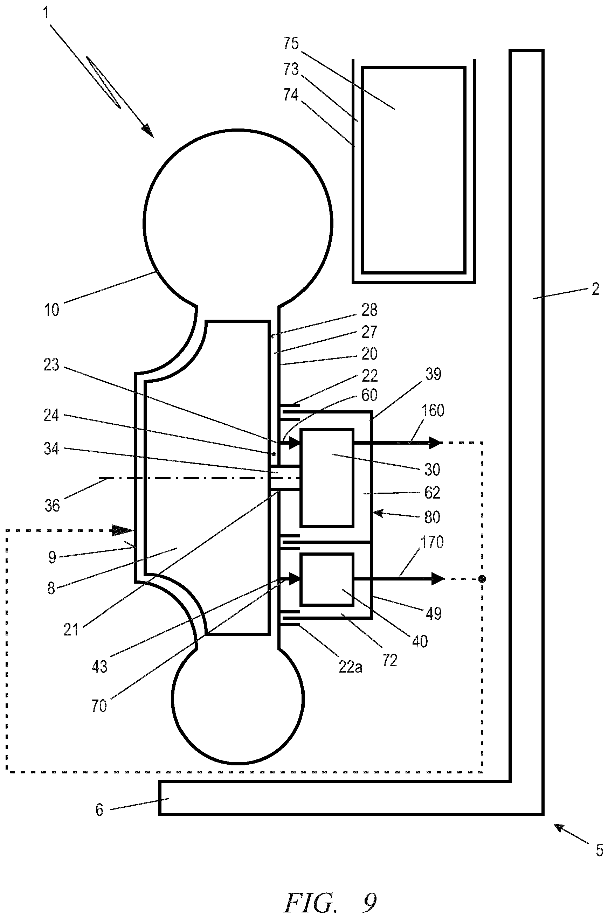

In Fig. 9 ist schematisch das Blasgerät 1 auf der Trage 5 aus Rückenplatte 2 und Standplatte 6 wiedergegeben. Das Motorgehäuse 39 und das Elektronikgehäuse 49 bilden in diesem gezeigten Ausführungsbeispiel ein gemeinsames Gehäuse 80. Vorteilhaft ist das gemeinsame Gehäuse 80 auf eine Gehäusehalterung 22 aufgesteckt, wobei ergänzend zur Gehäusehalterung 22 des Motorgehäuses 39 eine Gehäusehalterung 22a für das Elektronikgehäuse 49 vorgesehen ist. Das gemeinsame Gehäuse 80 wird über die Gehäusehalterungen 22, 22a an der axialen Stirnseite 20 der Gebläsespirale 10 gehalten.

Der zur Kühlung des Elektromotors 30 aus dem Druckbereich 24 der Gebläsespirale 10 über die erste Kühlluftöffnung 23 dem Motorgehäuse 39 zuströmende erste Kühlluftstrom 60 tritt unmittelbar in den Kühlluftraum 62 des Motorgehäuses 39 ein. Entsprechend tritt in den Kühlluftraum 72 des Elektronikgehäuses 49 über die zweite Kühlluftöffnung 43 ein zweiter Kühlluftstrom 70 ein. Das Motorgehäuse 39 weist Öffnungen 56 als Luftauslassöffnungen auf, über die ein Abluftstrom 160 des Motors 30 austritt. Entsprechend weist das Elektronikgehäuse 49 einen Luftauslass auf, über den ein Abluftstrom 170 der Steuerungselektronik 40 austritt.

In der Darstellung nach Fig. 9 sind der erste Kühlluftstrom 60 und der zweite Kühlluftstrom 70 voneinander getrennte Kühlluftströme. Es kann zweckmäßig sein, eine Kühlluftstrom 60 zuerst durch das Motorgehäuse 39 und anschließend durch das Elektronikgehäuse 49 zu führen. Vorteilhaft kann bei einer derartigen Ausführung die Kühlluftöffnung 43 in das Elektronikgehäuse 49 entfallen. Alternativ ist auch möglich, den Kühlluftstrom zuerst durch das Elektronikgehäuse 49 und anschließend durch das Motorgehäuse 39 zu führen. Vorteilhaft kann bei einer derartigen Ausführung die Kühlluftöffnung 23 in das Motorgehäuse 39 entfallen.

In weiterer Ausgestaltung der Erfindung kann es zweckmäßig sein, die Abluftströme 160 und 170 der Ansaugöffnung 9 der Gebläsespirale 10 zuzuführen, wie in Fig. 9 strichliert dargestellt ist. Ein in die Umgebung ausgeblasener Ablaufstrom wird so vermieden.

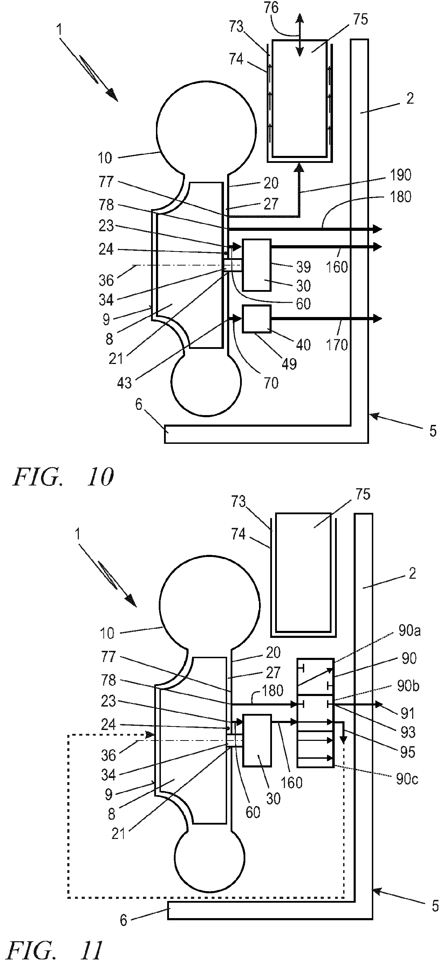

Im Ausführungsbeispiel nach Fig. 10 sind neben der Kühlluftöffnung 23 für die Motorkühlung und der Kühlluftöffnung 43 für die Kühlung der Steuerungselektronik 40 weitere Kühlluftöffnungen 77 und 78 in der axialen Stirnwand 20 der Gebläsespirale 10 ausgebildet.

Über die Kühlluftöffnung 77 wird aus dem Spalt 27 zwischen Stirnwand 20 und dem Gebläserad 8 Kühlluft abgezweigt, die als Kühlluftstrom 190 einem Gehäuseschacht 74 zugeführt wird. Vorteilhaft tritt der Kühlluftstrom 190 im Bodenbereich des Gehäuseschachtes 74 in den Innenraum des Gehäuseschachtes 74 ein. Der Gehäuseschacht 74 ist zur Aufnahme eines Akkupacks 75 vorgesehen, der in Richtung des Doppelpfeils 76 in den Gehäuseschacht 74 eingeschoben oder aus diesem entnommen werden kann. Die Anordnung ist so getroffen, dass zwischen dem in den Gehäuseschacht 74 eingeschobenen Akkupack 75 und dem Gehäuseschacht 74 ein Spalt 73 ausgebildet ist, durch den der in den Gehäuseschacht 74 eingeleitete Kühlluftstrom 190 nach außen strömt. Der Kühlluftstrom 190 ist ein Druckluftstrom, sodass sich eine Zwangsströmung aus dem Bodenbereich des Gehäuseschachtes 74 durch den Spalt 73 und die Einschuböffnung nach außen ergibt. Dadurch ist eine Zwangskühlung des Akkupacks 75 gewährleistet.

Über die Kühlluftöffnung 78 wird aus der Gebläsespirale 10 ein weiterer Kühlluftstrom 180 abgezweigt, der unmittelbar der Rückenplatte 2 zugeführt ist. Die Rückenplatte 2 ist derart ausgebildet, dass sie von dem Kühlluftstrom 180 durchströmt wird. Bei hohen Umgebungstemperaturen kann der Rücken eines Benutzers gekühlt werden.

Alternativ oder ergänzend können die warmen Abluftströme 160 und 170 der Motorkühlung und der Elektronikkühlung der Rückenplatte 2 zugeführt werden. Die Rückenplatte 2 ist derart ausgebildet, dass sie von einem zugeführten Abluftstrom 160 und/oder 170 durchströmt wird. Dadurch kann bei niedrigen Umgebungstemperaturen der Rücken eines Benutzers gewärmt werden. Die Abluftströme 160 und 170 führen die Wärme des Elektromotors 30 und/oder der Steuerungselektronik 40 ab. Ein Abluftstrom 160, 170 kann in Abhängigkeit der Temperatur der angesaugten Umgebungsluft eine Temperatur von z.B. 20° bis 40° oder auch höher aufweisen. Zum Wärmen des Rückens eines Benutzers steht ausreichend Wärmeenergie zur Verfügung.

In Fig. 11 ist beispielhaft ein Strömungsventil 90 gezeigt, über das der Kühlluftstrom 180 und ein warmer Abluftstrom 160 der Rückenplatte 2 gesteuert ist. Das Strömungsventil 90 weist drei Schaltstellungen 90a, 90b, und 90c auf. Über einen ersten Ausgang 93 des Strömungsventils 90 wird ein Luftstrom 91 der Rückenplatte 2 zugeführt. Die Rückenplatte 2 ist derart ausgebildet, dass sie zumindest teilweise von dem Luftstrom 91 durchströmt wird. Über den Luftstrom 91 kann der Rücken eines Benutzers gewärmt oder gekühlt werden. Über einen zweiten Ausgang 95 erfolgt die Ableitung eines nicht genutzten Abluftstroms. Zweckmäßig erfolgt die Ableitung des Abluftstroms 160, 170 zur Ansaugöffnung 9 der Gebläsespirale 10, wie in Fig. 11 strichliert dargestellt ist.

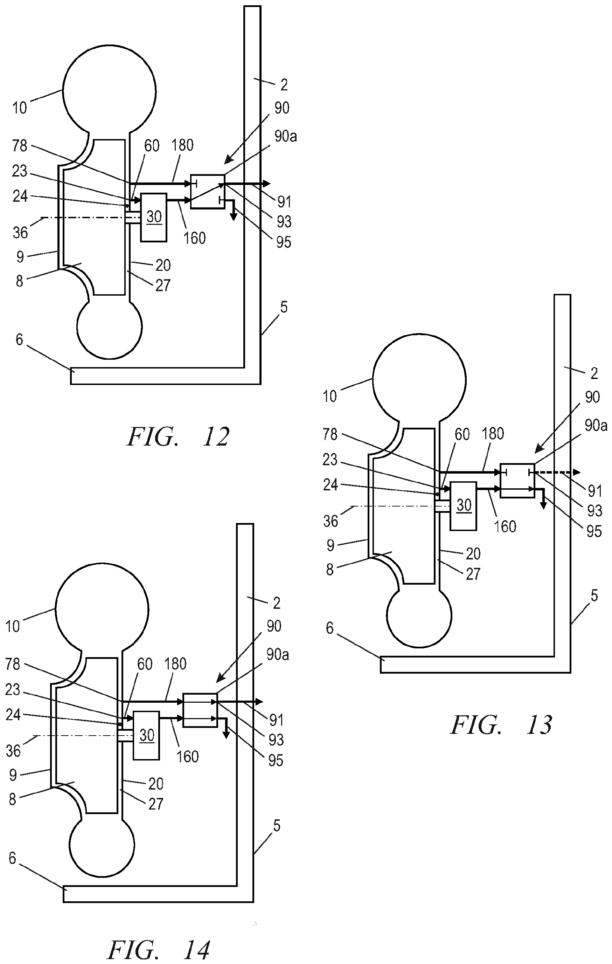

In der Darstellung nach Fig. 12 ist steht das Strömungsventil 90 in der Schaltstellung 90a. Der Kühlluftstrom 180 ist gesperrt; der Abluftstrom 160 ist auf den ersten Ausgang 93 geschaltet. Der der Rückenplatte 2 zugeführte Luftstrom 91 ist durch den Abluftstrom 160 gebildet. Der Rücken eines Benutzers kann gewärmt werden.

In der Darstellung nach Fig. 13 steht das Strömungsventil 90 in seiner Sperrstellung 90b. Der Rückenplatte 2 wird kein Luftstrom zugeführt. Der Ausgang 93 des Strömungsventils 90 ist gesperrt. Der dem Strömungsventil 90 zugeführte Abluftstrom 160 der Motorkühlung wird auf den zweiten Ausgang 95 geschaltet und abgeleitet. Bevorzugt erfolgt die Ableitung des Abluftstroms zur Ansaugöffnung 9 der Gebläsespirale 10.

In der Darstellung nach Fig. 14 steht das Strömungsventil 90 in der dritten Schaltstellung 90c. In dieser Schaltstellung ist der Kühlluftstrom 180 auf den ersten Ausgang 93 des Strömungsventils 90 geschaltet. Der Luftstrom 91 zur Rückenplatte 2 ist durch den Kühlluftstrom 180 gebildet. Der Rücken eines Benutzers kann gekühlt werden. Der aus dem Motorgehäuse austretende Abluftstrom 160 ist in der dritten Schaltstellung 90c dem Ausgang 95 zugeführt. Über den Ausgang 95 wird der Abluftstrom 160 in die Umgebung ausgeblasen oder vorteilhaft der Ansaugöffnung 9 der Gebläsespirale 10 zugeführt.

## Patentansprüche

1. Elektrisches Blasgerät mit einer Gebläsespirale (10) und einem in der Gebläsespirale (10) drehenden Gebläserad (8), und mit einem auf einer axialen Stirnwand (20) der Gebläsespirale (10) angeordneten Elektromotor (30) mit einer Antriebswelle (34), die durch eine Wellenöffnung (21) in der axialen Stirnwand (20) in die Gebläsespirale (10) einragt und mit dem Gebläserad (8) verbunden ist, und mit einer in der axialen Stirnwand (20) der Gebläsespirale (10) ausgebildeten Kühlluftöffnung (23), wobei über die Kühlluftöffnung (23) ein den Elektromotor (30) kühlender Kühlluftstrom (60) geführt ist,
**dadurch gekennzeichnet,**
**dass** die Kühlluftöffnung (23) in einem Druckbereich (24) der Gebläsespirale (10) angeordnet und der Kühlluftstrom (60) zum Elektromotor (30) ein Druckluftstrom ist, der eine Strömungsrichtung aufweist, die aus der Gebläsespirale (10) über die Kühlluftöffnung (23) zum Elektromotor (30) gerichtet ist.

2. Blasgerät nach Anspruch 1,
**dadurch gekennzeichnet, dass** nach dem Austritt des Kühlluftstroms (60) aus der ersten Kühlluftöffnung (23) in dessen Strömungsweg eine Strömungsdrossel (29) angeordnet ist.

3. Blasgerät nach Anspruch 1 oder 2,
**dadurch gekennzeichnet, dass** die erste Kühlluftöffnung (23) aus mindestens einer bis mehreren Teilluftöffnungen (25) zusammengesetzt ist.

4. Blasgerät nach Anspruch 3,
**dadurch gekennzeichnet, dass** die Teilluftöffnungen (25) in Drehrichtung (D) des Gebläserades (8) hintereinander angeordnet sind.

5. Blasgerät nach Anspruch 3 oder 4,
**dadurch gekennzeichnet, dass** die Teilluftöffnungen (25) in Drehrichtung (D) des Gebläserades (8) auf einem gemeinsamen Umfangskreis (26) um die Antriebswelle (34) angeordnet sind.

6. Blasgerät nach einem der Ansprüche 3 bis 5,
**dadurch gekennzeichnet, dass** eine Teilluftöffnung (25) als Luftkanal (50) ausgebildet ist, der einen Lufteinlass (51) und einen Luftauslass (52) aufweist, wobei zwischen dem Lufteinlass (51) auf der Innenseite der axialen Stirnwand (20) und dem Luftauslass (52) auf der Außenseite der axialen Stirnwand (20) eine Strömungsrampe (53) ausgebildet ist, die in Drehrichtung (D) des Gebläserades (10) zum Luftauslass (52) abfällt.

7. Blasgerät nach einem der Ansprüche 1 bis 6,
**dadurch gekennzeichnet, dass** eine Steuerungselektronik (40) vorgesehen ist, die geeignet ist, in Abhängigkeit eines Bedienelementes den Elektromotor (30) aus einer elektrischen Energiequelle (41) zu bestromen, und dass in der axialen Stirnwand (20) der Gebläsespirale (10) eine zweite Kühlluftöffnung (43) ausgebildet ist, über die ein zweiter Kühlluftstrom (70) aus der Gebläsespirale (10) über die zweite Kühlluftöffnung (43) zur Steuerungselektronik (40) geführt ist.

8. Blasgerät nach Anspruch 7,
**dadurch gekennzeichnet, dass** der zweite Kühlluftstrom (70) ein Druckluftstrom ist.

9. Blasgerät nach Anspruch 7 oder 8,
**dadurch gekennzeichnet, dass** der Kühlluftstrom (60) aus der Gebläsespirale (10) über die erste Kühlluftöffnung (23) zum Elektromotor (30) ein erster Kühlluftstrom (60) ist, und der erste und der zweite Kühlluftstrom (60, 70) voneinander getrennte Kühlluftströme sind.

10. Blasgerät nach einem der Ansprüche 7 bis 9,
**dadurch gekennzeichnet, dass** die zweite Kühlluftöffnung (43) mit einem größeren radialen Abstand (R₂) zur Wellenöffnung (21) liegt als die erste Kühlluftöffnung (23).

11. Blasgerät nach einem der Ansprüche 7 bis 10,
**dadurch gekennzeichnet, dass** die erste Kühlluftöffnung (23) im Bereich eines niedrigen Druckniveaus der Gebläsespirale (10) in der axialen Stirnwand (20) vorgesehen ist und die zweite Kühlluftöffnung (43) im Bereich eines höheren Druckniveaus der Gebläsespirale (10) in der Stirnwand (20) der Gebläsespirale (10) vorgesehen ist.

12. Blasgerät nach einem der Ansprüche 7 bis 11,
**dadurch gekennzeichnet, dass** der Elektromotor (30) in einem Motorgehäuse (39) aufgenommen ist, dessen Innenraum einen ersten Kühlluftraum (62) ausbildet, und die Steuerungselektronik (40) in einem Elektronikgehäuse (49) aufgenommen ist, wobei das Elektronikgehäuse (49) einen vom Kühlluftraum (62) des Motorgehäuses (9) getrennten, weiteren Kühlluftraum (72) ausbildet.

13. Blasgerät nach Anspruch 12,
**dadurch gekennzeichnet, dass** der erste Kühlluftstrom (60) über die erste Kühlluftöffnung (23) in den Kühlluftraum (62) des Motorgehäuses (39) eintritt und über die zweite Kühlluftöffnung (43) der zweite Kühlluftstrom (70) in den weiteren Kühlluftraum (72) des Elektronikgehäuses (49) eintritt.

14. Blasgerät nach Anspruch 12 oder 13,
**dadurch gekennzeichnet, dass** das Motorgehäuse (39) und das Elektronikgehäuse (49) auf der gleichen axialen Stirnwand (20) der Gebläsespirale (10) gehalten sind.

15. Blasgerät nach einem der Ansprüche 12 oder 14,
**dadurch gekennzeichnet, dass** das Motorgehäuse (39) und das Elektronikgehäuse (49) ein gemeinsames Gehäuse (80) bilden.

16. Blasgerät nach einem der Ansprüche 1 bis 14,
**dadurch gekennzeichnet, dass** die erste Kühlluftöffnung (23) radial innerhalb der Befestigungselemente (32) eines Tragflansches (31) einer Motorlagerung liegt, über die der Elektromotor (30) an der axialen Stirnwand (20) der Gebläsespirale (10) gehalten ist.

17. Blasgerät nach einem der Ansprüche 1 bis 17,
**dadurch gekennzeichnet, dass** in der axialen Stirnwand (20) der Gebläsespirale (10) eine weitere Kühlluftöffnung (77) ausgebildet ist, und der aus der Kühlluftöffnung (77) austretende weitere Druckluftstrom als Kühlluftstrom (190) in einen Gehäuseschacht (74) zur Aufnahme eines Akkupacks (75) eingeleitet ist.

18. Blasgerät nach einem der Ansprüche 1 bis 18,
**dadurch gekennzeichnet, dass** ein über eine Kühlluftöffnung (78) aus der Gebläsespirale (10) abgezweigter Kühlluftstrom (180) und/oder ein aus dem Motorgehäuse (39) und/oder dem Elektronikgehäuse (49) austretender Abluftstrom (160, 170) durch die Rückenplatte (2) geführt ist.

19. Blasgerät nach Anspruch 19,
**dadurch gekennzeichnet, dass** der Kühlluftstrom (180) und/oder ein Abluftstrom (160, 170) über ein steuerbares Strömungsventil (90) der Rückenplatte (2) zugeführt ist.

20. Blasgerät nach einem der Ansprüche 1 bis 19,
**dadurch gekennzeichnet, dass** ein aus dem Motorgehäuse (39) und/oder dem Elektronikgehäuse (49) austretender Abluftstrom (160, 170) einer Ansaugöffnung (9) der Gebläsespirale (10) zugeführt ist.
